# EUROPÄISCHE PATENTSCHRIFT

(11) **EP 2 110 621 B1**
(45) Veröffentlichungstag und Bekanntmachung des Hinweises auf die Patenterteilung: **16.05.2012**
(21) Anmeldenummer: 09155741.3
(22) Anmeldetag: 20.03.2009
(51) Int. Cl.: F24J 3/08

(54) **Erdkollektor**
Earth collector
Collecteur géothermique

(30) Priorität: 15.04.2008 DE 202008005197 U
(43) Veröffentlichungstag der Anmeldung: 21.10.2009
(73) Patentinhaber: Frei, Peter, 80333 München (DE)
(72) Erfinder: Frei, Peter, 80333 München (DE)
(74) Vertreter: Hofstetter, Alfons J.

(56) Entgegenhaltungen:
- DE-A1- 2 928 893
- DE-U- 8 019 308
- DE-U-202006 008 187
- DE-U-202006 019 426
- JP-A- 2007 010 275
- JP-A- 2007 315 742
- US-A- 5 004 374
- US-A- 5 054 541
- US-A- 5 081 848
- US-A1- 2005 006 049

## Beschreibung

Die vorliegende Erfindung betrifft einen Erdkollektor bestehend aus mindestens einem ein Wärmeträgermedium leitenden, flexiblen Rohr, wobei das Rohr ein erstes Ende zur Verbindung mit einem Vorlaufrohr oder mindestens einer Sammler-Nerteilereinheit zur Aufnahme des Wärmeträgermediums oder mit mindestens einer Wärmepumpe und ein zweites Ende zur Verbindung mit einem Rücklaufrohr oder der mindestens einen Sammler-/Verteilereinheit oder der mindestens einen Wärmepumpe aufweist.

Erdkollektoren dieser Art dienen dazu, die im Erdreich enthaltene Wärmeenergie mittels Wärmeübertragung auf das in den Rohren der Erdkollektoren strömende Wärmeträgermedium zu übertragen. Die Wärmenergie wird anschließend einer Wärmepumpe zugeführt, die diese Wärme an zum Beispiel einen Heizkreislauf eines Gebäudes abgibt. Üblicherweise werden Erdkollektoren benutzt, die über ein großflächig im Erdreich angeordnetes Rohrsystem verfügen. Dabei sind die Menge und die Wärmeentzugsfläche abhängig vom Wärmebedarf und der Bodenbeschaffenheit. Insbesondere horizontal, in einer Ebene verlegte Erdkollektoren haben einen sehr hohen Flächenbedarf. Üblicherweise beträgt die vom Erdkollektor benötigte Fläche etwa das 1,5-fache bis 2,5-fache der zu beheizenden Gebäudefläche. Dabei muss diese Fläche unbebaut und unversiegelt sein, so dass in etwa 1,2 m bis 2,0 m Tiefe der Erdkollektor verlegt werden kann. Zudem muss eine nachträgliche Überbauung der Fläche vermieden werden, da sonst keine schnelle Regeneration des genutzten Erdreichs möglich ist. Aus der DE 202007004243 U1 und der WO 05/015095 A1 sind Erdkollektoren bekannt, bei denen die das Wärmeträgermedium leitenden flexiblen Rohre meanderförmig in einer Ebene angeordnet sind. Neben einem hohen Flächenverbrauch ist der Einbau dieser und anderer bekannter Erdkollektoren üblicherweise mit einem relativ großen Zeitaufwand und entsprechenden Kosten verbunden. Zudem können bekannte Erdkollektorsysteme vor Ort, d. h. im Einsatzgebiet nur sehr schwer an mögliche Besonderheiten des Erdreichs oder auch topografische Gegebenheiten angepasst werden, um eine optimierte Wärmeaufnahmefähigkeit zu gewährleisten. Die US 5 004 374 A beschreibt einen Erdkollektor, bei dem die Leitungen für den Vor- und Rücklauf des Wärmeträgermediums ringförmig in vertikaler Richtung übereinander angeordnet sind. Die einzelnen Ringebenen des Vor- und Rücklaufs sind jeweils mit Verbindungsrohren miteinander verbunden, so dass der Vorlauf spiralartig in vertikaler Richtung absteigt und der Rücklauf spiralartig in vertikaler Richtung aufsteigt. Weitere Erdkollektoren mit zum Teil spiralförmig ausgebildeten Rohren für die Durchleitung des Wärmeträgermediums sind aus der US 5 081 848 A, der DE 20 2006 019 426 U, der US 2005/006049 A, der JP 2007 010275 A und der JP 2007 315742 A bekannt.

Es ist daher Aufgabe der vorliegenden Erfindung, einen gattungsgemäßen Erdkollektor bereitzustellen, welcher einen schnellen und kostengünstigen Einbau sowie eine optimierte Wärmeaufnahmefähigkeit gewährleistet.

Zur Lösung dieser Aufgabe dient ein Erdkollektor mit den Merkmalen des Patentanspruchs 1. Vorteilhafte Ausgestaltungen des erfindungsgemäßen Erdkollektors sind in den Unteransprüchen beschrieben.

Ein erfindungsgemäßer Erdkollektor besteht aus mindestens einem ein Wärmeträgermedium leitenden, flexiblen Rohr, wobei das Rohr ein erstes Endes zur Verbindung mit einem Vorlaufrohr oder mindestens einer Sammler-/Verteilereinheit zur Aufnahme des Wärmeträgermediums oder mit mindestens einer Wärmepumpe und ein zweites Ende zur Verbindung mit einem Rücklaufrohr oder der mindestens einen Sammler-/Verteilereinheit oder der mindestens einen Wärmepumpe aufweist, und wobei das Rohr aus mindestens zwei nacheinander ausgebildeten Doppelschlaufen ausgebildet ist, wobei die unteren und oberen Umkehrpunkte der Doppelschlaufen versetzt zueinander angeordnet sind. Dabei können die jeweils unteren und oberen Umkehrpunkte der Doppelschlaufen in ungefähr parallel zueinander verlaufenden Ebenen angeordnet sein. Der erfindungsgemäße Erdkollektor kann schnell und kostengünstig im Erdreich verlegt werden. Zudem ist gewährleistet, dass er vor Ort an die topografischen.

Gegebenheiten angepasst werden kann und somit eine optimierte Wärmeaufnahmefähigkeit aufweist. Aufgrund der doppelschlaufenartigen Ausbildung und der hintereinander versetzten Anordnung der Doppelschlaufen kann eine relativ große Rohrlänge in einem relativ kleinen Volumen des Erdreichs angeordnet werden, so dass sich im Vergleich zu herkömmlichen Erdkollektoren mit zum Beispiel in einer Ebene mäanderförmig angeordneten und verlaufenden Rohren eine deutlich verbesserte Wärmeaufnahmekapazität des erfindungsgemäßen Erdkollektors ergibt. Zudem kann die benötigte Länge des Erdkollektors sehr leicht vor Ort durch eine entsprechende Längenbemessung des Rohrs beziehungsweise der entsprechenden Anzahl von Doppelschlaufen des Rohrs bereitgestellt werden. Durch die nicht nur in einer Ebene erfolgenden Anordnung der Rohre, sondern den sich räumlich erstreckenden Verlauf der Doppelschlaufen des Rohrs in Verlegerichtung wird eine relativ hohe Verlegedichte des Rohrs bei einem gleichzeitigen minimalen Flächenbedarf gewährleistet. Das Rohr und/oder die Vor- und Rücklaufrohre können aus verwitterungsbeständigem Kunststoff, insbesondere Polyethylen oder Polybutylen bestehen. Es ist aber auch möglich, dass das Rohr aus Metall, wie zum Beispiel Kupfer oder einer Metall-Legierung besteht. Das Wärmeträgermedium kann dabei aus Wasser oder einer Mischung aus Wasser und einem Frostschutzmittel bestehen. Die Doppelschlaufengestalt des Rohres des Erdkollektors ermöglicht zudem einen einfachen Transport des Erdkollektors auf trommelartigen Vorrichtungen, von denen die benötigte Rohrlänge abgetrennt werden kann.

In weiteren vorteilhaften Ausgestaltungen des erfindungsgemäßen Erdkollektors besteht dieser aus mindestens einem liegend oder stehend verlegten Rohr. Vorteilhafterweise ist es möglich, je nach Beschaffenheit der Topografie des Erdreichs, in dem der Erdkollektor verlegt werden soll, diesen mit stehenden oder liegenden Doppelschlaufen anzuordnen.

In weiteren vorteilhaften Ausgestaltungen des erfindungsgemäßen Erdkollektors sind die Doppelschlaufen im Bereich der unteren und/oder oberen Umkehrpunkte mit jeweils mindestens einem länglich ausgebildeten Befestigungselement mittels mindestens jeweils einem Verbindungselement verbunden. Dabei können die Verbindungen zwischen den Doppelschlaufen und dem mindestens einem Befestigungselement lösbar ausgebildet sein. Insbesondere sind die Verbindungselemente in vordefinierten festen und/oder variablen Abständen zueinander auf dem mindestens einen Befestigungselement angeordnet. So können zum Beispiel die Verbindungselemente auf dem jeweiligen Befestigungselement zueinander verschiebbar ausgebildet sein. Durch derartige Ausgestaltungen wird die Stabilität des Erdkollektors insgesamt erhöht, zudem ist es möglich, die Abstände zwischen den einzelnen Doppelschlaufen in vordefinierten Abständen zueinander anzuordnen. So kann der Erdkollektor beziehungsweise das Rohr über eine bestimmte Längenausdehnung eine vorbestimmte Anzahl an Doppelschlaufen aufweisen. Die Anzahl der Doppelschlaufen wird bestimmt durch die Beschaffenheit des Erdreichs und die damit verbundene optimierte Wärmeaustausch- und Wärmeaufnahmekapazität des Erdkollektors. Durch die lösbare Ausbildung der Verbindungen ist es zudem ohne Weiteres möglich, gegebenenfalls notwendige Anpassungen der Anzahl an Doppelschlaufen einfach und schnell durchzuführen.

In weiteren vorteilhaften Ausgestaltungen des erfindungsgemäßen Erdkollektors sind die Verbindungselemente als Kabelbinder, Klemmen, Doppelklemmen, Clipse oder Doppelclipse ausgebildet. Insbesondere können die Doppelklemmen oder Doppelclipse zwei um 90° zueinander versetzt ausgebildete Rohraufnahmen aufweisen. Eine derartige Ausgestaltung der Verbindungselemente ermöglicht eine schnelle und einfache Verbindung zwischen dem Rohr und den Befestigungselementen.

In weiteren vorteilhaften Ausgestaltungen der Erfindung ist mindestens ein länglich ausgebildetes Befestigungselement rohrförmig ausgebildet. Zudem ist es möglich, dass die länglich ausgebildeten Befestigungselemente Teile einer das Rohr zumindest teilweise umgebenden Rahmenstruktur sind. Gemäß einer weiteren Ausführungsform ist das mindestens eine länglich ausgebildete Befestigungselement Teil eines Rohrsystems zur Übertragung von Wärme aus einem Sonnenkollektor. Dabei kann die die Befestigungselemente umfassende Rahmenstruktur insgesamt Teil des Rohrsystems zur Übertragung von Wärme aus einem Sonnenkollektor sein. Dadurch ist es möglich, dass die Wärme des Sonnenkollektors dem Erdreich im Bereich des Erdkollektors und damit dem Wärmeträgermedium zugeleitet wird. Somit kann einerseits die Effektivität des Erdkollektors beziehungsweise der damit verbundenen Wärmepumpe, insbesondere bei kalten Außentemperaturen oder bei geringer Sonneneinstrahlung, deutlich erhöht werden. Andererseits kann ein Einfrieren des Wärmeträgermediums zuverlässig verhindert werden. Bei einer Ausbildung einer Rahmenstruktur wird wiederum die Stabilität des Erdkollektors insgesamt verbessert.

In einer weiteren vorteilhaften Ausgestaltung sind die Verbindungselemente mit dem jeweiligen länglich ausgebildeten Befestigungselement einstückig ausgebildet. Dadurch ist es möglich, dass die Abstände zwischen den einzelnen Verbindungselementen bereits vorab definiert und fixiert werden. Zudem ist eine einfache und schnelle Verbindung beziehungsweise Befestigung des Rohres an den Befestigungselementen möglich.

In einer weiteren vorteilhaften Ausgestaltung der Erfindung ist der Erdkollektor als vorgefertigtes Bauelement ausgebildet. Dadurch ist es möglich, dass der Erdkollektor wiederum schnell und kostengünstig in das Erdreich eingegraben werden kann, da die Form und die Größe des Erdkollektors vorgegeben und vorbekannt sind.

Gemäß einer weiteren vorteilhaften Ausgestaltung der Erfindung sind mehrere Erdkollektoren in Serie oder parallel geschaltet beziehungsweise angeordnet. Dadurch lassen sich je nach Beschaffenheit des Erdreichs und der Umgebungstopografie unterschiedliche Anlagenaufbauten zur Gewährleistung einer optimierten Wärmeaufnahmefähigkeit gewährleisten.

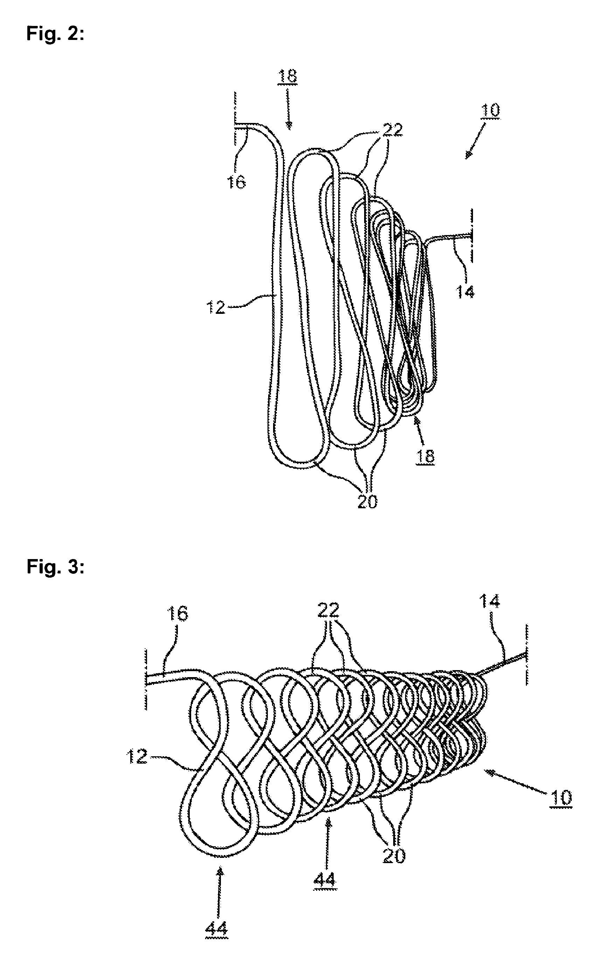

Weitere Einzelheiten, Merkmale und Vorteile der Erfindung ergeben sich aus der folgenden Beschreibung des in der Figur 3 dargestellten Ausführungsbeispiels.Es zeigen
- Figur 1: eine schematische seitliche Darstellung eines Erdkollektors;
- Figur 2: eine schematische Darstellung des mediumführenden Rohrs des Erdkollektors gemäß Figur 1 in einer Ansicht von schräg vorne;
- Figur 3: eine schematische Darstellung eines mediumführenden Rohrs eines erfindungsgemäßen Erdkollektors in einer Ansicht von schräg vorne:
- Figur 4: eine schematische Darstellung eines Doppelclips des erfindungsgemäßen Erdkollektors; und
- Figur 5: eine schematische Darstellung des Doppelclips gemäß Figur 4 in einer Ansicht von oben.

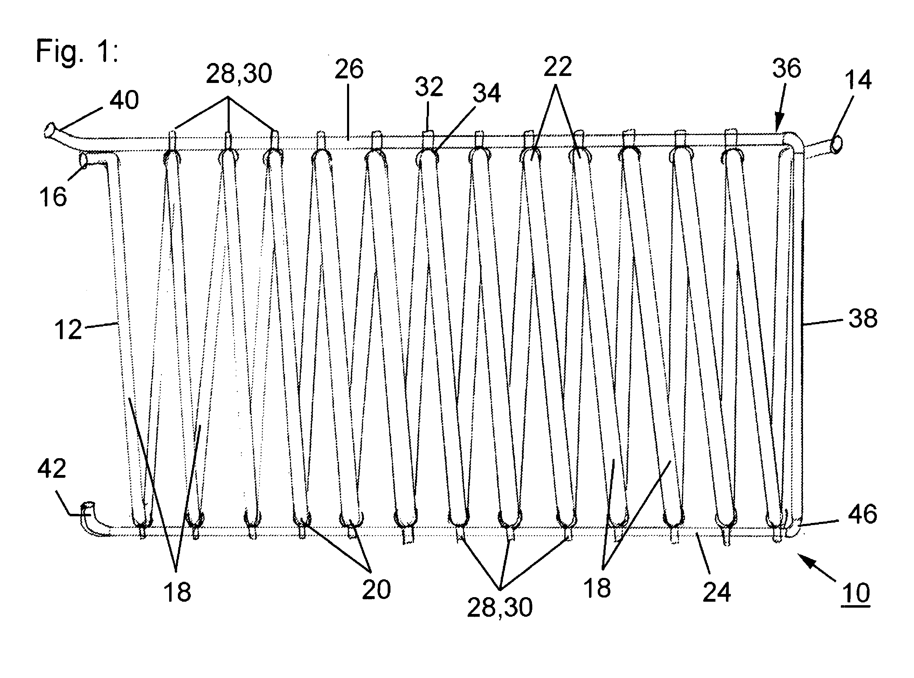

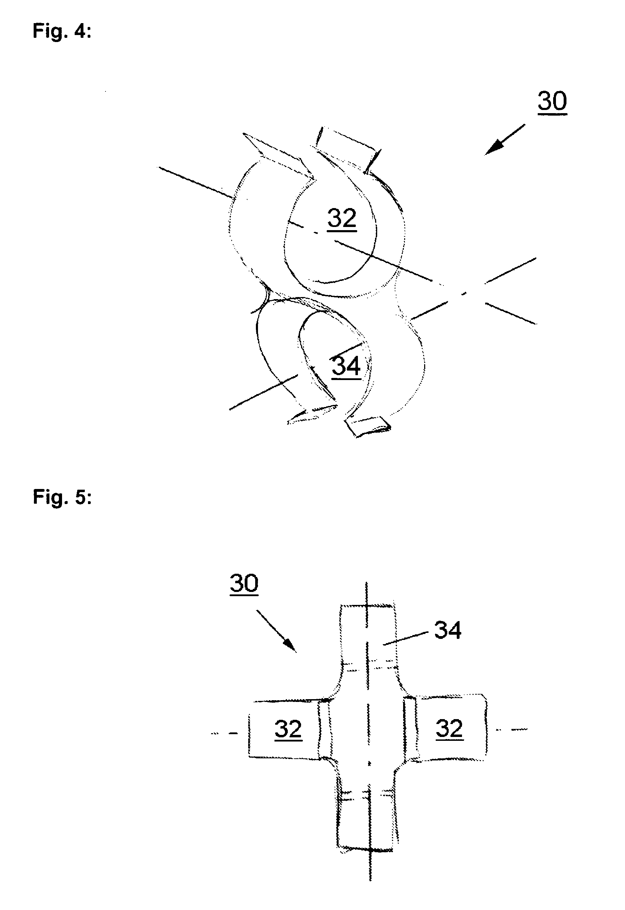

Die Figur 1 zeigt eine schematische seitliche Darstellung eines Erdkollektors 10. Der Erdkollektor 10 umfasst dabei ein flexibles Rohr 12 zur Leitung eines Wärmeträgermediums. Das Wärmeträgermedium kann dabei aus Wasser oder einer Mischung aus Wasser und einem Frostschutzmittel bestehen. Das Rohr 12 besteht aus einem witterungsbeständigen Kunststoff, nämlich Polyethylen. Das Rohr weist zudem ein erstes Ende 14 zur Verbindung mit einem Vorlaufrohr oder mindestens einer Sammler-/Verteilereinheit zur Aufnahme des Wärmeträgermediums oder mit mindestens einer Wärmepumpe (nicht dargestellt) auf. An dem dem ersten Ende 14 gegenüberliegenden zweiten Ende 16 wird eine Verbindung zu einem Rücklaufrohr oder der mindestens einen Sammler-/Verteilereinheit oder der mindestens einen Wärmepumpe ermöglicht. Das Rohr 12 ist aus einer Vielzahl nacheinander ausgebildeter Schlaufen 18 ausgebildet, wobei die unteren und oberen Umkehrpunkte 20, 22 der Schlaufen 18 jeweils versetzt zueinander angeordnet sind. Die unteren und oberen Umkehrpunkte 20, 22 der Schlaufen 18 sind in ungefähr parallel zueinander verlaufenden Ebenen angeordnet. Zudem sind die Schlaufen 18 im Bereich der unteren und oberen Umkehrpunkte 20, 22 mit jeweils einem länglich ausgebildeten Befestigungselement 24, 26 mittels jeweils einem Verbindungselement 28 verbunden. Die Verbindungselemente 28 dienen dabei als Abstandshalter zwischen den einzelnen Schlaufen 18 beziehungsweise zwischen den Umkehrpunkten 20, 22 der Schlaufen 18. Die Abstände zwischen den einzelnen Verbindungselementen 28 sind dabei ungefähr gleich ausgebildet. Es können aber auch variable Abstände verwirklicht werden. Des Weiteren ist es möglich, dass die Verbindungselemente 28 auf dem jeweiligen Befestigungselement 24, 26 zueinander verschiebbar ausgebildet sind. Die Verbindungselemente sind als Doppelclipse 30 ausgebildet. Diese werden in den Figuren 4 und 5 näher beschrieben.

Der dargestellte Erdkollektor 10 weist üblicherweise eine Längenausdehnung von ca. 3 bis 6 m auf. Der Abstand zwischen den Verbindungselementen 28 beträgt üblicherweise 10 bis 40 cm. Die Längserstreckung der Schlaufen 18 beträgt in dem dargestellten Beispiel ca. 2 m. Auch andere Maße sind ohne weiteres realisierbar.

In dem gemäß Figur 1 dargestellten Erdkollektors 10 sind die länglich ausgebildeten Befestigungselemente 24, 26 rohrförmig ausgebildet. Sie bilden einerseits die Teile einer das Rohr 12 teilweise umgebenden Rahmenstruktur 36. Hierzu sind die Befestigungselemente 24, 26 über rohrförmige Eckelemente 46 mit einem sich entlang der Längserstreckung der Schlaufen 18 erstreckenden Längsrohr 38 verbunden. An dem dem Längsrohr 38 gegenüberliegenden Ende weisen die Befestigungselemente 24, 26 jeweils Enden 40, 42 auf, die zum Anschluss an ein Rohrsystem zur Übertragung von Wärme aus einem Sonnenkollektor dienen. Somit sind die länglich ausgebildeten Befestigungselemente 24, 26 Teile dieses Rohrsystems (nicht dargestellt). Die Befestigungselemente 24, 26 sowie das Längsrohr 38 und die Elemente 46 sind aus einem verwitterungsbeständigen Kunststoff, insbesondere Polyethylen gefertigt. Im Gegensatz zu dem Rohr 12 weisen diese jedoch Stangenform auf. Es ist aber auch möglich, die Befestigungselemente 24, 26 oder auch die Rahmenstruktur 36 aus anderen Materialien, wie zum Beispiel Metall, Metall-Legierungen oder auch Holz zu fertigen. Die Rahmenstruktur kann auch mindestens eine Kunststoffschiene umfassen. Für die Ausgestaltung der Befestigungselemente 24, 26 als Teil eines Rohrsystems zur Übertragung von Wärme aus einem Sonnenkollektor haben sich als Ausgangsmaterial Kunststoffrohre als vorteilhaft erwiesen.

Figur 2 zeigt eine schematische Darstellung des mediumführenden Rohrs 12 des Erdkollektors 10 gemäß Figur 1 in einer Ansicht von schräg vorne. Man erkennt die schlaufenförmige Ausgestaltung des Rohrs 12 aus einer Vielzahl von hintereinander angeordneten Schlaufen 18. Die oberen und unteren Umkehrpunkte 22, 20 sind dabei jeweils versetzt zueinander angeordnet. Des Weiteren wird der sich räumlich erstreckende Verlauf der Schlaufen 18 des Rohrs 12 in Verlegerichtung und die daraus resultierende hohe Verlegedichte des Rohrs 12 bei einem gleichzeitigen minimalen Flächenbedarf deutlich.

Figur 3 zeigt eine schematische Darstellung eines mediumführenden Rohrs 12 eines erfindungsgemäßen Erdkollektors 10 in einer Ansicht von schräg vorne. Man erkennt, dass das Rohr 12 aus einer Vielzahl hintereinander beziehungsweise nacheinander ausgebildeten Doppelschlaufen 44 ausgebildet ist. Die oberen und unteren Umkehrpunkte 22, 20 der einzelnen Doppelschlaufen 44 sind versetzt zueinander angeordnet. In der Draufsicht von vorne ergibt sich eine Ausformung des Rohrs 12 in Form einer Acht. Eine derartige Ausgestaltung ermöglicht eine besonders dichte Packung des Erdkollektors 10. Des Weiteren wird der sich räumlich erstreckende Verlauf der Schlaufen 44 des Rohrs 12 in Verlegerichtung und die daraus resultierende hohe Verlegedichte des Rohrs 12 bei einem gleichzeitigen minimalen Flächenbedarf deutlich.

Figur 4 zeigt eine schematische Darstellung eines Doppelclips 30 des Erdkollektors 10. Man erkennt, dass der Doppelclips 30 zwei um 90° zueinander versetzt ausgebildete Rohraufnahmen 32, 34 aufweist. In die Rohraufnahmen 32, 34 können einerseits die Befestigungselemente 24, 26 und andererseits das Rohr 12 im Bereich der oberen und unteren Umkehrpunkte 22, 20 der der Doppelschlaufen 44 eingesetzt und befestigt werden. Der dargestellte Doppelclip 30 kann aus einem verwitterungsbeständigen Kunststoff, aus Metall, aus einer Metall-Legierung oder eben anderem geeigneten Material bestehen. Zudem kann er verschließbar oder nicht-verschließbar ausgebildet sein.

Figur 5 zeigt eine schematische Darstellung des Doppelclips 30 gemäß Figur 4 in einer Ansicht von oben. Man erkennt die um 90° versetzt zueinander ausgebildete Anordnung der beiden Rohraufnahmen 32, 34.

## Patentansprüche

1. Erdkollektor bestehend aus mindestens einem ein Wärmeträgermedium leitenden, flexiblen Rohr (12), wobei das Rohr (12) ein erstes Ende (14) zur Verbindung mit einem Vorlaufrohr oder mindestens einer Sammler-Nerteilereinheit zur Aufnahme des Wärmeträgermediums oder mit mindestens einer Wärmepumpe und ein zweites Ende (16) zur Verbindung mit einem Rücklaufrohr oder der mindestens einen Sammler-/Verteilereinheit oder der mindestens einen Wärmepumpe aufweist,
**dadurch gekennzeichnet,**
**dass** das Rohr (12) aus mindestens zwei nacheinander ausgebildeten Doppelschlaufen (44) ausgebildet ist, wobei die unteren und oberen Umkehrpunkte (20, 22) der Doppelschlaufen (44) versetzt zueinander angeordnet sind.

2. Erdkollektor nach Anspruch 1,
**dadurch gekennzeichnet,**
**dass** die jeweiligen unteren und oberen Umkehrpunkte (20, 22) der Doppelschlaufen (44) in ungefähr parallel zueinander verlaufenden Ebenen angeordnet sind.

3. Erdkollektor nach Anspruch 1 oder 2,
**dadurch gekennzeichnet,**
**dass** der Erdkollektor (10) aus mindestens einem liegend oder stehend verlegten Rohr (12) besteht.

4. Erdkollektor nach einem der vorhergehenden Ansprüche,
**dadurch gekennzeichnet,**
**dass** die Doppelschlaufen (44) im Bereich der unteren und/oder oberen Umkehrpunkte (20, 22) mit jeweils mindestens einem länglich ausgebildeten Befestigungselement (24, 26) mittels mindestens jeweils einem Verbindungselement (28) verbunden sind.

5. Erdkollektor nach Anspruch 4,
**dadurch gekennzeichnet,**
**dass** die Verbindungen zwischen den Doppelschlaufen (44) und dem mindestens einem Befestigungselement (24, 26) lösbar ausgebildet sind.

6. Erdkollektor nach Anspruch 4 oder 5,
**dadurch gekennzeichnet,**
**dass** die Verbindungselemente (28) in vordefinierten festen und/oder variablen Abständen zueinander auf dem mindestens einen Befestigungselement (24, 26) angeordnet sind.

7. Erdkollektor nach Anspruch 6,
**dadurch gekennzeichnet,**
**dass** die Verbindungselemente (28) auf dem jeweiligen Befestigungselement (24, 26) zueinander verschiebbar ausgebildet sind.

8. Erdkollektor nach einem der Ansprüche 4 bis 7,
**dadurch gekennzeichnet,**
**dass** die Verbindungselemente (28) als Kabelbinder, Klemmen, Doppelklemmen, Clips, Doppelclips (30) oder Clipschiene ausgebildet sind.

9. Erdkollektor nach Anspruch 8,
**dadurch gekennzeichnet,**
**dass** die Doppelklemmen oder der Doppelclips (30) zwei um 90° zueinander versetzt ausgebildete Rohraufnahmen (32, 34) aufweist.

10. Erdkollektor nach einem der Ansprüche 4 bis 9,
**dadurch gekennzeichnet,**
**dass** mindestens ein länglich ausgebildetes Befestigungselement (24, 26) rohrförmig ausgebildet ist.

11. Erdkollektor nach einem der Ansprüche 4 bis 10,
**dadurch gekennzeichnet,**
**dass** die länglich ausgebildeten Befestigungselemente (24, 26) Teile einer das Rohr (12) zumindest teilweise umgebenden Rahmenstruktur (36) sind.

12. Erdkollektor nach Anspruch 10 oder 11,
**dadurch gekennzeichnet,**
**dass** mindestens ein länglich ausgebildetes Befestigungselement (24, 26) Teil eines Rohrsystems zur Übertragung von Wärme aus einem Sonnenkollektor ist.

13. Erdkollektor nach einem der Ansprüche 4 bis 12,
**dadurch gekennzeichnet,**
**dass** die Verbindungselemente (28) mit dem jeweiligen Befestigungselement (24, 26) einstückig ausgebildet sind.

14. Erdkollektor nach einem der vorhergehenden Ansprüche,
**dadurch gekennzeichnet,**
**dass** der Erdkollektor (10) als vorgefertigtes Bauelement ausgebildet ist.

15. Erdkollektor nach einem der vorhergehenden Ansprüche,
**dadurch gekennzeichnet,**
**dass** mehrere Erdkollektoren (10) in Serie oder parallel geschaltet beziehungsweise angeordnet sind.

## Claims

1. An earth collector consisting of at least one flexible pipe (12) conducting a heat transfer medium, wherein the pipe (12) has a first end (14) for connection to a flow pipe or at least one collector/distributor unit for receiving the heat transfer medium or to at least one heat pump and a second end (16) for connection to a return pipe or the at least one collector/distributor unit or the at least one heat pump,
**characterized in that**
the pipe (12) is formed of at least two consecutively formed double loops (44), wherein the lower and upper reversal points (20, 22) of the double loops (44) are disposed offset to each other.

2. The earth collector according to claim 1,
**characterized in that**
the respective lower and upper reversal points (20, 22) of the double loops (44) are disposed in planes extending approximately parallel to each other.

3. The earth collector according to claim 1 or 2,
**characterized in that**
the earth collector (10) is composed of at least one horizontally or vertically laid pipe (12).

4. The earth collector according to anyone of the preceding claims,
**characterized in that**
the double loops (44) are connected to each at least one elongated formed fastening element (24, 26) by means of at least one connecting element (28) respectively in the region of the lower and/or upper reversal points (20, 22).

5. The earth collector according to claim 4,
**characterized in that**
the connections between the double loops (44) and the at least one fastening element (24, 26) are detachably formed.

6. The earth collector according to claim 4 or 5,
**characterized in that**
the connecting elements (28) are disposed in predefined fixed and/or variable distances to each other on the at least one fastening element (24, 26).

7. The earth collector according to claim 6,
**characterized in that**
the connecting elements (28) are formed on the respective fastening element (24, 26) displaceably to each other.

8. The earth collector according to any one of claims 4 to 7,
**characterized in that**
the connecting elements (28) are formed as cable ties, clamps, double clamps, clips, double clips (30) or clip bar.

9. The earth collector according to claim 8,
**characterized in that**
the double clamps or the double clips (30) have pipe receptacles (32, 34) formed offset to each other by 90 °.

10. The earth collector according to any one of claims 4 to 9,
**characterized in that**
at least one elongated formed fastening element (24, 26) is tubular formed.

11. The earth collector according to any one of claims 4 to 10,
**characterized in that**
the elongated formed fastening elements (24, 26) are parts of a frame structure (36) at least partially surrounding the pipe (12).

12. The earth collector according to claim 10 or 11,
**characterized in that**
at least one elongated formed fastening element (24, 26) is a part of a pipe system for transferring heat from a solar collector.

13. The earth collector according to any one of claims 4 to 12,
**characterized in that**
the connecting elements (28) are integrally formed with the respective fastening element (24, 26).

14. The earth collector according to anyone of the preceding claims,
**characterized in that**
the earth collector (10) is formed as a pre-fabricated component.

15. The earth collector according to anyone of the preceding claims,
**characterized in that**
multiple earth collectors (10) are connected or disposed in series or in parallel.

## Revendications

1. Collecteur géothermique, se composant d'au moins un tube flexible (12), canalisant un fluide caloporteur, moyennant quoi le tube (12) présente une première extrémité (14), destinée à assurer la liaison avec un tube d'alimentation ou au moins un ensemble collecteur / distributeur, destiné à recueillir le fluide caloporteur ou avec au moins une pompe à chaleur et une deuxième extrémité (16), destinée à assurer la liaison avec un tube de retour ou le au moins un ensemble collecteur / distributeur ou la au moins une pompe à chaleur,
**caractérisé en ce**
**que** le tube (12) est constitué d'au moins deux doubles boucles (44), formées l'une après l'autre, moyennant quoi les points de renversement inférieurs et supérieurs (20, 22) des doubles boucles (44) sont agencés décalés l'un par rapport à l'autre.

2. Collecteur géothermique suivant la revendication 1,
**caractérisé en ce**
**que** les points de renversement inférieurs et supérieurs (20, 22) respectifs des doubles boucles (44) sont agencés dans des plans, évoluant à peu près parallèlement l'un par rapport à l'autre.

3. Collecteur géothermique suivant la revendication 1 ou 2,
**caractérisé en ce**
**que** le collecteur géothermique (10) se compose d'au moins un tube (12), posé horizontalement ou verticalement.

4. Collecteur géothermique suivant l'une des revendications précédentes,
**caractérisé en ce**
**que** les doubles boucles (44) sont reliées, dans le secteur des points de renversement inférieurs et / ou supérieurs (20, 22) à, respectivement, au moins un élément de fixation (24, 26), formé de manière oblongue, au moyen d'au moins, respectivement, un élément de liaison (28).

5. Collecteur géothermique suivant la revendication 4,
**caractérisé en ce**
**que** les liaisons entre les doubles boucles (44) et le au moins un élément de fixation (24, 26) sont formées de manière amovible.

6. Collecteur géothermique suivant la revendication 4 ou 5,
**caractérisé en ce**
**que** les éléments de liaison (28) sont agencés, suivant des intervalles prédéfinis fixes et / ou variables, les uns par rapport aux autres, sur le au moins un élément de fixation (24, 26).

7. Collecteur géothermique suivant la revendication 6,
**caractérisé en ce**
**que** les éléments de liaison (28) sont formés, sur l'élément de fixation (24, 26) respectif, de manière mobile les uns par rapport aux autres.

8. Collecteur géothermique suivant l'une des revendications 4 à 7,
**caractérisé en ce**
**que** les éléments de liaison (28) sont formés en tant que serre-câbles, colliers, colliers doubles, pinces, pinces doubles (30) ou barrette à pinces.

9. Collecteur géothermique suivant la revendication 8,
**caractérisé en ce**
**que** les colliers doubles ou les pinces doubles (30) présentent deux admissions de tube (32, 34), formées décalés de 90° l'une par rapport à l'autre.

10. Collecteur géothermique suivant l'une des revendications 4 à 9,
**caractérisé en ce**
**qu'**au moins un élément de fixation (24, 26), formé de manière oblongue, est formé de manière tubulaire.

11. Collecteur géothermique suivant l'une des revendications 4 à 10,
**caractérisé en ce**
**que** les éléments de fixation (24, 26), formés de manière oblongue, font partie d'une structure châssis (36), qui entoure au moins partiellement le tube (12).

12. Collecteur géothermique suivant la revendication 10 ou 11,
**caractérisé en ce**
**qu'**au moins un élément de fixation (24, 26), formé de manière oblongue, fait partie d'un système de tubes, destiné à transmettre la chaleur, provenant d'un collecteur solaire.

13. Collecteur géothermique suivant l'une des revendications 4 à 12,
**caractérisé en ce**
**que** les éléments de liaison (28) sont formés d'un seul tenant avec l'élément de fixation (24, 26) respectif.

14. Collecteur géothermique suivant l'une des revendications qui précèdent,
**caractérisé en ce**
**que** le collecteur géothermique (10) est formé en tant que composant préfabriqué.

15. Collecteur géothermique suivant l'une des revendications qui précèdent,
**caractérisé en ce**
**que** plusieurs collecteurs géothermiques (10) sont montés ou agencés en série ou en parallèle.
